# EUROPÄISCHE PATENTSCHRIFT

(11) **EP 2 457 086 B1**
(45) Veröffentlichungstag und Bekanntmachung des Hinweises auf die Patenterteilung: **28.02.2018**
(21) Anmeldenummer: 10745001.7
(22) Anmeldetag: 16.07.2010
(51) Int. Cl.: G01N 30/90, G01N 1/40, G01N 35/10, H01J 49/04

(54) **VERFAHREN UND VORRICHTUNG ZUR VORBEREITUNG VON SUBSTANZEN FÜR QUALITATIVE UND QUANTITATIVE ANALYSEN**
METHOD AND DEVICE FOR PREPARING SUBSTANCES FOR QUALITATIVE AND QUANTITATIVE ANALYSES
PROCÉDÉ ET DISPOSITIF PERMETTANT DE PRÉPARER DES SUBSTANCES POUR DES ANALYSES QUANTITATIVES ET QUALITATIVES

(30) Priorität: 24.07.2009 CH 11662009
(43) Veröffentlichungstag der Anmeldung: 30.05.2012
(73) Patentinhaber: Camag, 4132 Muttenz (CH)
(72) Erfinder: LOPPACHER, Matthias, CH-4054 Basel (CH); REICH, Eike, CH-4310 Rheinfelden (CH)
(74) Vertreter: Fleck, Hermann-Josef
(86) Internationale Anmeldenummer: PCT/IB2010/053262
(87) Internationale Veröffentlichungsnummer: WO 2011/010265

(56) Entgegenhaltungen:
- WO-A1-02/08747
- WO-A1-93/01494
- US-A1- 2005 233 367
- US-B1- 7 059 206
- LUFTMANN HEINRICH: "A simple device for the extraction of TLC spots: direct coupling with an electrospray mass spectrometer" ANALYTICAL AND BIOANALYTICAL CHEMISTRY, Bd. 378, Nr. 4, 23. Februar 2004 (2004-02-23), Seiten 964-968, XP002602911 SPRINGER VERLAG
- ALEXANDER ALPMANN ET AL: "Improved online coupling of planar chromatography with electrospray mass spectrometry: extraction of zones from glass plates" ANALYTICAL AND BIOANALYTICAL CHEMISTRY, SPRINGER, BERLIN, DE LNKD- DOI:10.1007/S00216-006-0692-Y, Bd. 386, Nr. 5, 16. August 2006 (2006-08-16), Seiten 1543-1551, XP019441138 ISSN: 1618-2650
- JULIEN DÉGLON ET AL: "On-line desorption of dried blood spot: A novel approach for the direct LC/MS analysis of [mu]-whole blood samples", JOURNAL OF PHARMACEUTICAL AND BIOMEDICAL ANALYSIS, vol. 49, no. 4, 1 May 2009 (2009-05-01), pages 1034-1039, XP055018176, ISSN: 0731-7085, DOI: 10.1016/j.jpba.2009.02.001

## Beschreibung

Die vorliegende Erfindung betrifft ein Verfahren zur Vorbereitung von Substanzen für qualitative und quantitative Analysen gemäss Oberbegriff des Patentanspruchs 1 und eine Vorrichtung zur Durchführung des Verfahrens gemäß Oberbegriff des Anspruchs 6.

Verschiedene Maßnahmen zur Vorbereitung einer qualitativen und quantitativen Analyse von Substanzen in einem abgedichteten Hohlraum sind in Luftmann Heinrich: "A simple device for the extraction of TLC spots: direct coupling with an electrospray mass spectrometer" ANALYTICAL AND BIOANALYTICAL CHEMISTRY, Bd. 378, Nr. 4, 23. Februar 2004 (2004-02-23), Seiten 964-968, SPRINGER VERLAG; in der WO 02/8747 A1 und in Alexander Alpmann et al "Improved online coupling of planar plates "ANALYTICAL AND BIOANALYTICAL CHEMISTRY, SPRINGER, BERLIN, DE LNKD- DOI:10.1007/S00216-006-0692-Y, Bd. 386, Nr. 5, 16. August 2006 (2006-08-16), Seiten 1543-1551, XP0 19441138 ISSN: 1618-2650.

Der Artikel von JULIEN DEGLON ET AL: "On-line desorption of dried blood spot: A novel approach for the direct LC/MS analysis of µ-whole blood samples", JOURNAL OF PHARMACEUTICAL AND BIOMEDICAL ANALYSIS, Bd. 49, Nr. 4, 1. Mai 2009 (2009-05-01), Seiten 1034-1039, XP055018176, ISSN: 0731-7085, DOI: 10.1016, j.jpba.2009,02001, befasst sich ebenfalls mit der Analyse von Substanzen wie Blutproben in einem abgedichteten Hohlraum und einem daran angeschlossenen Messgerät.

Für Substanzproben, beispielshalber für biologisch aktive Proben wie z. B. Proben von Blut, Knochenmark, Gehirn- und Gelenkflüssigkeiten, Sperma, Stuhl etc. die entnommen werden um später im Labor analysiert zu werden, bieten sich heute keine einfachen Verfahren an, die mit kleinen Mengen in der Analyse möglichst präzise Messwerte ergeben. Speziell für getrocknete (Tropfen-) Proben z. B. von Blut oder Urin, sowie für andere getrocknete biologische Proben, sind die vorhandenen Verfahren aufwendig, zeitraubend und für einige Analysen zu rudimentär um präzise und verlässliche Daten zu gewährleisten. Um die Proben zu transportieren und z. B. in Reagenzgläsern den Messgeräten zuzuführen, müssen diese normalerweise in Lösung, Emulsion oder in verdünnter Mischungsform vorliegen. Solche Proben enthal-ten relativ kleine Anteile der gesuchten und zu beurteilenden Substanzen. Speziell im Drogenscreening oder bei Dopingprüfungen, aber auch bei allen andern routinemässigen Untersuchungen wäre es wünschenswert, zur Messung möglichst nur die gewünschten Substanzen in möglichst hoher Konzentration zu haben, um präzise Messungen in kurzer Zeit durchführen zu können.

Es wäre wünschenswert, die Substanz mittels bekannter Methode aus der Matrix der Probe heraus zu nehmen. Da Proben aber meist geringer Menge sind und die Substanzen vielfach nur in sehr kleinen Mengen darin enthalten sind und deshalb ohne Trägerflüssigkeit keinem Messgerät zugeführt werden können, behilft man sich damit, die Substanzen mit bekannten Flüssigkeiten und Medien wie z. B. Methanol oder Pufferlösungen als Träger zusammen zu bringen, die im Messgerät nicht stören. Viele Teile der Probe sind im Zusammenhang mit der Messung im Analysengerät als Ballast zu bezeichnen, sie behindern eine genaue Messung. Je weniger solcher Ballast, typischer weise Matrix der Probe im zu analysierenden Muster, Extrakt oder Lösung ist, desto grösser ist der relative Anteil des Analyten (zu prüfender Teil des Musters). Wenn dieser nun zusammen mit einer bekannten Menge eines seiner Isotope eine Mischung mit grossem Anteil im Muster darstellt, ist die Chance einer genauen Messung gross.

Das vorliegende Verfahren und die hier vorgestellte Vorrichtung basieren auf den Erkenntnissen die in den Methoden der Dünnschicht-Chromatographie gewonnen wurden. Die DE10036293A1 von Luftmann beschreibt eine Vorrichtung mit der Proben isoliert werden können. Die US 5,208,458 von Busch stellt ein Verfahren und eine Vorrichtung vor, mit deren Hilfe definierte Proben aus Gel entnommen werden können. Es hat sich allerdings gezeigt, dass sich die Idee von Busch, die seinem Patent zugrunde liegt, in der Praxis in der Anwendung für Gel nicht realisieren lässt.

Die vorliegende Erfindung stellt sich nunmehr die Aufgabe Verfahren und Vorrichtung zur Vorbereitung von Substanzen für qualitative und quantitative Analysen der eingangs genannten Art für flüssige, hochviskose, getrocknete, koagulierte oder eingedickte, in fester Form vorliegende, biologisch aktive eingetrocknete, oder zur Stabilisation mit Schutzkolloiden versetzte Proben sowie Mikroskopieschnitte derart zu verbessern, dass die Substanzen in hoher Konzentration und in definiertem Umfeld den bekannten Analysenmethoden und -Geräten zugeführt werden können. Damit können auch kleine Mengen der zu prüfenden Substanzen in hochkonzentrierter Form zuverlässig und genau analysiert werden.

Diese Aufgabe löst das Verfahren zur Vorbereitung von Substanzen für qualitative und quantitative Analysen mit den Merkmalen des Patentanspruches 1, sowie die Vorrichtung mit den Merkmalen des Patentanspruchs 6. Weitere erfindungsgemässe Merkmale gehen aus den abhängigen Ansprüchen hervor und deren Vorteile sind in der nachfolgenden Beschreibung erläutert.

In einer Probe ist die gesuchte Substanz in aller Regel in einer Matrix eingebettet. Diese Matrix kann aus unlöslich festen oder löslichen Bestandteilen bestehen. Das vorgestellte Verfahren setzt sich zum Ziel, die gesuchte Substanz - den Analyt - aus den Proben "auszuschwemmen" und gemeinsam mit mitgerissener oder gelöster Matrix, der zugesetzten Flüssigkeit und evtl. einem internen Standard als Muster dem Messinstrument zuzuführen. Je nach Zusammensetzung der Probe geschieht dies mittels einfachem Auswaschen, Anlösen oder Extrahieren. Die Substanz wird dabei aus der Matrix herausgelöst, so dass sie gemeinsam mit der Flüssigkeit, z. B. einem Lösungs- oder Extraktionsmittel dem Messgerät, z. B. dem Spektrometer zugeführt werden kann. Je direkter (kurze Leitung) ein Muster in diesem Zustand zur Messstelle gelangt, und je höher deren Konzentration ist, desto zuverlässiger wird die Messung.

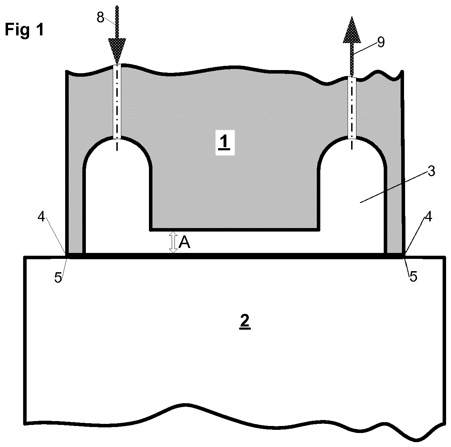

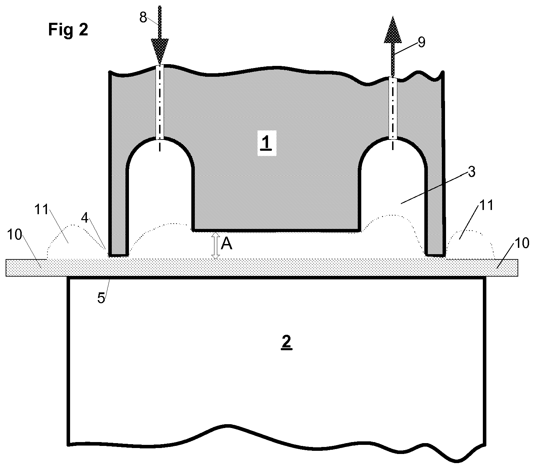

Der erste Schritt des Verfahrens besteht darin, dass mit dem später beschriebenen Gerät ein definierter Bereich der Probe vom Umfeld in einem Hohlraum 3 (Fig 1) eingeschlossen und isoliert wird. Den wichtigsten Teil der Dichtung besorgen dabei die Dichtkanten 4 und 5. Zwischen den Dichtkanten 4,5 wird aber auch Material der Proben 11 zusammen gequetscht (Fig 2), um eine verbesserte Dichtheit zu erreichen.

In einem weiteren Schritt wird in den nunmehr geschlossenen Raum sodann eine möglichst kleine aber zureichende Menge Flüssigkeit zugegeben, die im geschlossenen Hohlraum 3 mit der Probe in Kontakt kommt. Je nach Eigenschaft der Probe und der darin enthaltenen Substanz kann mit dieser Flüssigkeit entweder direkt ausgespült, gelöst oder extrahiert werden oder es muss dem Ausspülen ein Aufweichprozess voran gehen. Im letzten Fall wird in einem nächsten Schritt die Flüssigkeit mit der Probe über eine gewisse Zeit im geschlossenen Bereich gemeinsam mit der Probe belassen und erst danach als Muster ausgespült. Die zur Aufweichung notwendige Zeit hängt von den Eigenschaften der Probe, der Flüssigkeit und der Substanz ab ist aber zumeist im Bereich von 1-60 Sekunden.

Von der Art der Probe, der zugeführten Flüssigkeit und der Substanz ist ebenfalls abhängig, ob man direkt ausschwemmen kann, oder einen Lösungs- oder einen Extraktionsprozess einleiten muss. Das vorgestellte Verfahren lässt alle Möglichkeiten zu. Für jede Substanz wird im Laborversuch festgelegt, welche Art und Menge Flüssigkeit zugeführt werden muss und welcher Prozess notwendig ist um die Substanz in der Art aufzubereiten, dass sie später in flüssigem Zustand transportierbar wird und die Messung genauer Analysewerte ermöglicht.

Das Ziel der vorhergehenden Schritte ist es, dem Messgerät über die Ableitung 9, zusammen in der klar definierten Flüssigkeit gelöst oder mit derselben gemischt, eine hochkonzentrierte Fraktion der Substanz zuzuführen. Diese wird hier "Muster" genannt. Man möchte möglichst wenig störende Teile der Matrix zum Messgerät "mitnehmen". Um nicht allzu grosse Mengen der zugeführten Flüssigkeit im Muster zu haben, wird die Mischung der extrahierten oder gelösten Substanz pfropfenförmig aus dem isolierten Hohlraum 3 hinausgedrückt und der Leitung zum Messinstrument zugeführt werden. Wichtig ist dabei, dass die Wege kurz sind und die Substanz so direkt wie möglich zur Messstelle gebracht wird.

Die notwendige Menge, Zeit und die Abfolge der Verfahrensschritte können je nach Probe und deren Matrix sehr unterschiedlich sein. Sie werden wie oben beschrieben auf empirischem Weg festgelegt und definiert.

Im Folgenden wird die Vorrichtung beschrieben. Die Figuren stellen mögliche Ausführungsbeispiele dar, welche in der nachfolgenden Beschreibung erläutert werden.

In der Zeichnung zeigt:
- Fig 1: Schnitt der geschlossenen Vorrichtung.
- Fig 2: Schnitt der geschlossenen Vorrichtung mit einer Probe auf einer Platte.
- Fig 3: Schnitt der offenen Vorrichtung mit Probe, Filter- und Folientuch.
- Fig 4: Schnitt der geschlossenen Vorrichtung mit Probe und Filtertuch.
- Fig 5: Schnitt der offenen Vorrichtung mit Probe, Filter- und Folientuch für Durchfluss.
- Fig 6: Schnitt der geschlossenen Vorrichtung mit Probe, Filter- und Folientuch für Durchfluss.

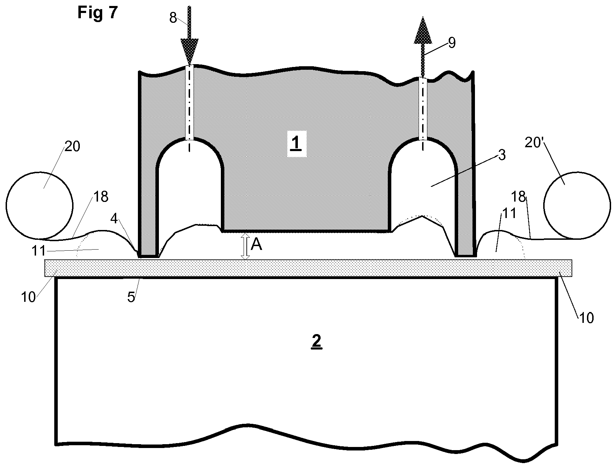

- Fig 7: Schnitt der geschlossenen Vorrichtung mit Probe auf einer Platte und Filtertuch.

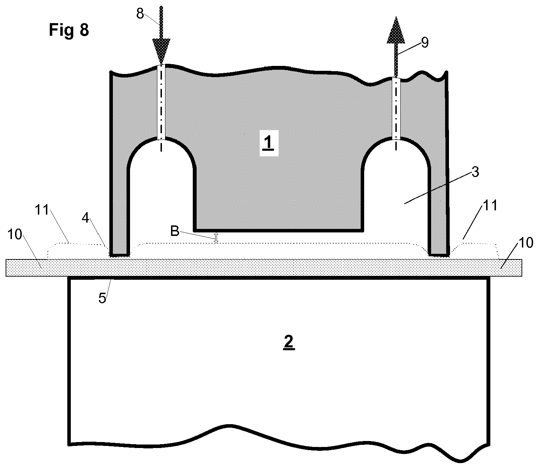

- Fig 8: Schnitt der geschlossenen Vorrichtung mit einer Probe auf einer Platte, die überspült wird.

Die entscheidende Phase im oben beschriebenen Verfahren erfolgt dann, wenn die Vorrichtung geschlossen ist, also wenn der Kopf 1 der Vorrichtung mit dem Gegenkopf 2 eine Einheit bildet und auf einander stehen (Fig 1) . Die Dichtkante 4 des Kopfes 1 bildet mit der Gegendichtkante 5 des Gegenkopfes 5 und dem Material der Probe 11, das zwischen den beiden Dichtkanten 4,5 eingeklemmt wird einen vollständig abgeschlossenen Hohlraum 3. In diesen Hohlraum 3 kann über eine Zuleitung 8 eine Flüssigkeit z.B. ein Ausspül-, Lösungs- oder Extraktionsmittel zugeführt werden. Material das sich im Hohlraum 3 befindet kann diesen nur über die Ableitung 9 verlassen. Dies geschieht dann, wenn der Hohlraum 3 aufgefüllt ist und durch Zuleitung 8 von neuem Flüssigkeit eingeführt wird. Durch die vorgesehenen räumlichen Verhältnisse können die mit der Flüssigkeit gemischten oder darin gelösten Substanzen mittels Durchströmung ausgeschwemmt oder propfenförmig durch die Ableitung 9 hinausgedrückt werden. Damit dies möglichst effizient geschieht, wird die Zuleitung 8 an einem "Ende" des Hohlraumes 3 und die Ableitung 9 am andern "Ende" angeordnet. Hat der Hohlraum 3 z.B. eine zylindrische Form, so sind die Zuleitung 8 und die Ableitung 9 an den sich am weitesten entfernten Tangenten des Zylinders angeordnet. Die Anordnung, welche für die zu prüfenden Materialen empirisch festgelegt wird, muss so erfolgen, dass im Hohlraum 3 möglichst keine, oder falls erwünscht gezielte Durchmischung stattfindet. Die beschriebene Anordnung von Zuleitung 8 und Ableitung 9 stellt nur eine mögliche Ausführungsform dar. Es können auch andere Varianten wie z.B. Koaxiale Anordnung mit zentraler Zuleitung und äusserer Ableitung oder auch mehrere Zu- und/oder Ableitungen vorhanden sein.

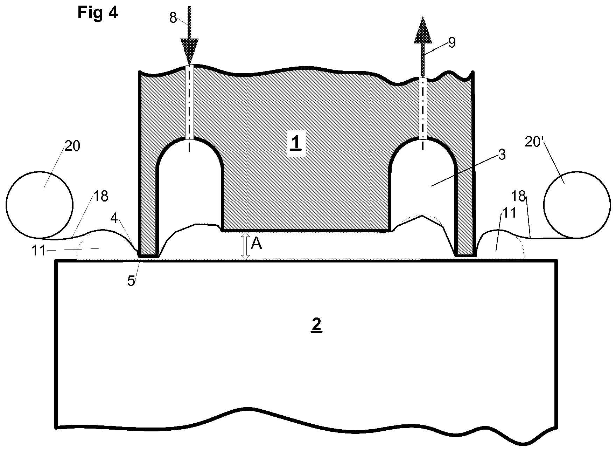

In Fig 1 ist dargestellt, dass die Dichtkante 4 und die Gegendichtkante 5 im dargestellten Aufriss eine gerade Linie bilden. Dies ist in der Praxis nicht notwendigerweise der Fall. Die Dichtlinie zwischen Dichtkante 4 und Gegendichtkante 5 kann sowohl in der Aufsicht als auch räumlich jede beliebige Kurve beschreiben. Die beiden müssen im geschlossenen Zustand, d.h. wenn der Kopf 1 mit Dichtkante 4 und der Gegenkopf 2 mit Gegendichtkante 5 aufeinander liegen, den Hohlraum 3 über die ganze Dichtlinie gleichmässig dichten. Obwohl hier von "Dichtkanten" die Rede ist, können diese auch flächenförmig ausgebildet sein, oder gar als ineinander greifende Profile ausgebildet sein. Die absolute Dichtheit und Isolation des Hohlraumes 3 wird dadurch erreicht, dass zwischen Dichtkante 4 und Gegendichtkante 5 Material der Probe 11 eingeklemmt wird und als "Dichtmasse" wirkt (Fig 4). Ebenso kann als "Dichtkante" eine herkömmliche Dichtung wie z.B. ein O-Ring mit rundem oder polygonen Querschnitt eingesetzt werden. Für die Form des Hohlraumes 3 oder für einzelne später beschriebene Vorrichtungs-Lösungen kann es sogar von Vorteil sein, wenn diese Dichtlinie eine räumlich angepasste Kurve aufweist. Eine weitere Ausführungsform kann auch eine konisch/konvexe Form sein. Es ist jedoch durchaus denkbar, dass der Gegenkopf 2 eine ebene Fläche darstellt, auf der die Dichtkante 4 wie in Fig 1 beispielhaft dargestellt einen Hohlraum 3 abdichtet.

Die Vorrichtung bietet die Möglichkeit das Verfahren den Proben, Substanzen und Träger-Flüssigkeiten anzupassen. Es kann mit nur zum Teil vollem Hohlraum 3 eine Durchströmung d.h. ein Auswaschen an der Oberfläche erreicht werden. Ebenso kann der Raum gänzlich gefüllt sein, dass man z.B. "channeling" vermeidet, was für den oben beschriebenen Aufweichprozess, für ein Anlösen und einen Extraktionsprozess wesentlich ist.

Proben 11 liegen vielfach zur Prüfung in Form von Substanzflecken, auf duktilen oder rigiden Platten 10 vor, wobei die Probe optional in einer auf der Platte aufgebrachten, chromatographischen Schicht enthalten ist. Fig 2 zeigt, wie eine Probe 11 die sich auf einer Platte 10 befindet, zwischen Kopf 1 und Gegenkopf 2 in die Vorrichtung eingebracht wird. Die Dichtkante 4 grenzt auf der Dünnschichtplatte 10 den Hohlraum 3 ab, in dem sich dann die zu lösende oder extrahierende Substanzprobe befindet. Zwischen der Dichtkante 4 des Kopfes 1 und der Platte 10 wird auch Material der Probe 11 und / oder der chromatographischen Schicht eingeklemmt. Dieses wirkt in vielen Fällen zusätzlich wie eine Dichtung und verhilft so den Hohlraum 3 optimal abzudichten.

Proben 11 die eine gewisse Eigenfestigkeit aufweisen wie z. B. Mikroskopieschnitte, können auch direkt zwischen Kopf 1 und Gegenkopf 2 eingelegt werden. Substanzproben 11 die auf einem saugfähigen Papier aufgebracht sind können ebenfalls genau so verarbeitet werden.

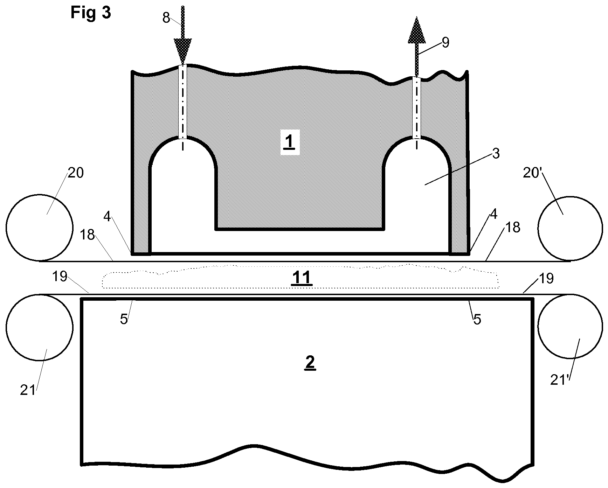

Bei Vorrichtungen gemäss Fig 1 und Fig 2 ist es normalerweise erforderlich, in der Ableitung 9 einen Filter, ein sogenannte "Fritte" einzubauen. Für verschiedene Proben und Substanzen werden verschiedene Filter gebraucht. Eine weitere Idee ist deshalb auch das Anbringen eines Filter 18, welches zwischen Substanzprobe 11 und Kopf 1 eingeschoben wird (Fig 3). Um das mühsame Einlegen von Filter 18 zu vermeiden kann z. B. eine Vorrichtung gewählt werden, welche von einer Filterrolle 20 den Filter 18 unter dem Kopf 1 durch auf die Filterrolle 20' führt. Für jede neue Probe 11 wird sodann an der Filterrolle 20' gedreht, so dass neuer Filter 18 unter den Kopf 1 (Fig 4) zu liegen kommt. Für die Ausführung des Filters 18 sind auch weitere Formen, wie z. B. individuelle Filterstreifen, Scheiben oder Plättchen, welche eine, mehrere oder, bei flächiger Anordnung von z. B. Hundert Proben 10 auf einer Platte 11, bis über Hundert Proben gemeinsam abdeckt. Der Filter 18 wird in diesem Fall dann vor den Messungen aller Proben manuell oder insbesondere bei geringer Probenzahl automatisch über die Platte 10 mit den Proben 11 gebracht.

Je nach Bedarf kann mit dieser Vorrichtung dann eine Probe 11 die auf einer Platte 10 aufgebracht ist, eigenfeste Substanzproben wie z. B. Mikroskopieschnitte oder in saugfähigem Papier befindliche Proben 11, die direkt auf dem Gegenkopf 2 aufliegen geprüft werden. Der Filter 18 ersetzt dabei die "Fritte" und gewährt eine gewisse Sicherheit, dass die Proben 11 nicht durch Rückstände am Kopf 1 verändert und damit verfälscht werden, da für jede neue Probe ein neuer, rückstandsfreier Filter oder Filterbereich eingesetzt wird.

Um diesen Effekt auch auf dem Gegenkopf 2 zu erreichen, kann eine zweite Vorrichtung (Fig 3) angebracht werden, die hier im vorliegenden Fall mit Folie 19 bezeichnet ist. Dies kann, muss aber nicht, derselbe Filter 18 sein. Auch diese Folie 19 wird von einer Rolle 21 über den Gegenkopf 2 auf eine Rolle 21 geführt. Folie 19 und/oder Filter 18 können mit einem typischen "internen Standard" behandelt sein, wie z.B. mit einem Isotop des Wirkstoffes oder andern Referenz-Substanzen in definierter Menge, damit gleichzeitig mit der Messung der Substanz auch eine Eichmessung des definierten Isotopen gemacht wird und verglichen werden kann.

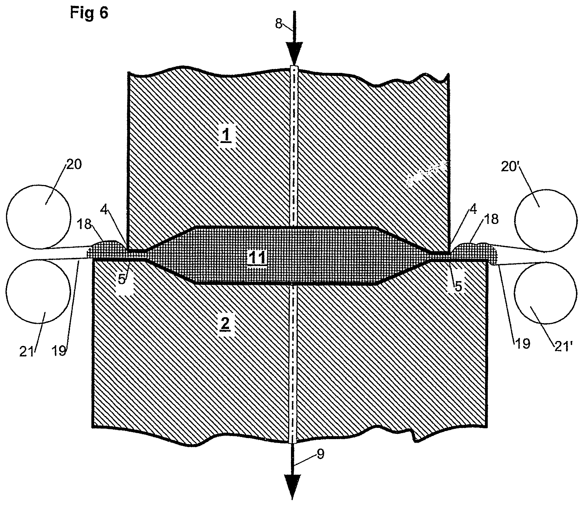

Im Falle der Anwendung gemäss Fig 3 wird die Folie 19 bevorzugt aus undurchlässigem Material bestehen, während in der Ausführung gemäss Fig 6 eine durchlässige Folie 19 verwendet werden muss. Der Filter 18 wird aus durchlässigem Material bestehen, ist perforiert oder wird bei der Anwendung perforiert um für die Flüssigkeit durchlässig zu sein. In Fig 3 ist ferner gezeigt, wie Filter 18 mittels Rollen 20, 20' und Folie 19 mittels Rollen 21, 21' für die Bearbeitung jeder neuen Probe 11 neu eingezogen werden kann. Der Filter 18 kann ferner mit einem sog. "internen Standard" imprägniert sein, der dann mit der zugeführten Flüssigkeit ausgewaschen und als Zusatz im Muster zum Messgerät geführt wird.

Sowohl Filter 18 als auch Folie 19 können bei Bedarf die Funktion einer duktilen oder elastischen Dichtung übernehmen. Für einige Proben 10 können Dichtkante 4 und Gegendichtkante 5 zusammen mit Filter 18, Folie 19 und Probe 11, gemeinsam die Abdichtung gewährleisten. Für Messungen von Proben 10 die von Mikroskopschnitten stammen kann es sich lohnen, die Dichtkante 4 und/oder die Gegendichtkante 5 mit einer Gummidichtung, z.B. mit einem Gummi-Ring beliebigen Querschnitts, zu versehen. Selbstverständlich können Dichtkante 4 und Gegendichtkante 5 auch Profil und Gegenprofil sein, deren Funktion ähnlich einer Labyrinth-Dichtung ist, welche dann durch qequetschte Teile der Probe 11 die absolute Dichtheit erzeugen.

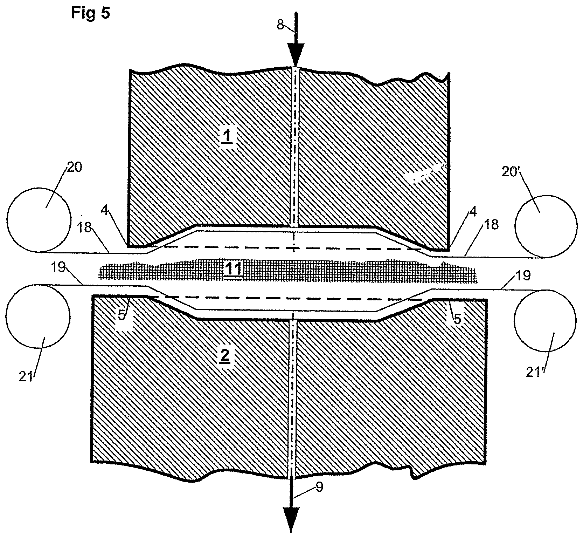

Wie die Figuren 5 und 6 zeigen ist auch eine Anordnung für Durchfluss der Flüssigkeit von Zuleitung 8 zur Ableitung 9 möglich. Vor allem für Proben mit genügend Eigenfestigkeit, oder solche die auf neutralem Filterpapier aufgebracht sind bietet sich diese Lösung dann an, wenn mittels Auswaschen, Lösen oder Extrahieren die gesuchte Substanz herausgelöst werden kann. Für Proben mit weniger Eigenfestigkeit ist zwar die Verarbeitung etwas schwieriger, jedoch nicht unmöglich, so dass sich auch die in diesen Zeichnungen dargestellten und hier beschriebenen Anordnungen in der Praxis durchaus bewähren.

## Patentansprüche

1. Verfahren zur Vorbereitung einer qualitativen und quantitativen Analyse von Substanzen,
**dadurch gekennzeichnet, dass**
in einem abgegrenzten und abgedichteten Hohlraum (3) ein definierter Bereich einer Probe (11) mit gewünschtem Analyt eingequetscht und isoliert wird, welcher danach mit einer über eine Zuleitung (8) zugeführten Flüssigkeit in Kontakt gebracht wird, wobei diese Flüssigkeit gemeinsam mit mitgerissener oder gelöster Matrix und dem gewünschten Analyt als sogenanntes Muster durch eine Ableitung (9) einem Messgerät zugeführt wird,
wobei der Hohlraum (3) durch einen Kopf (1) mit einer Dichtkante (3) und einen Gegenkopf (2) mit einer Gegendichtkante (5) oder durch einen Kopf (1) mit einer Dichtkante (3) und eine zwischen Kopf (1) und Gegenkopf (2) angeordnete Platte (10) abgegrenzt ist, und
wobei die absolute Dichtheit und Isolation des Hohlraums (3) dadurch erreicht wird, dass zwischen der Dichtkante (4) und der Gegendichtkante (5) oder der Dichtkante (4) und der Platte (10) das Material der Probe (11) eingeklemmt wird, und dass Dichtkante (4) und Gegendichtkante (5) im geschlossenen Zustand formschlüssig aufeinander liegen, oder Dichtkante (4) und Platte (10) im geschlossenen Zustand flach aufeinander liegen.

2. Verfahren nach Anspruch 1,
**dadurch gekennzeichnet,**
**dass** die eingebrachte Flüssigkeit die Probe (11) überströmt.

3. Verfahren nach Anspruch 1 ,
**dadurch gekennzeichnet,**
**dass** die eingebrachte Flüssigkeit die Probe (11) durchströmt.

4. Verfahren nach Anspruch 1 ,
**dadurch gekennzeichnet,**
**dass** die eingebrachte Flüssigkeit vorgängig dem Überströmen und dem Durchströmen zusammen mit der Probe (11) 1 - 60 Sekunden im Hohlraum (3) verbleibt, wobei die Flüssigkeit während dieser Zeit auf die Probe (11) einwirkt, wonach das Muster durch die Ableitung (9) dem Messgerät zugeführt wird.

5. Verfahren nach einem der vorhergehenden Ansprüche,
**dadurch gekennzeichnet,**
**dass** dem Muster im Hohlraum ein interner Standard beigefügt wird, wobei Muster und interner Standard gemeinsam durch die Ableitung (9) dem Messgerät zugeführt werden.

6. Vorrichtung zur Durchführung des Verfahrens nach Anspruch 1, mit einem Kopf (1) welcher zusammen mit einem Gegenkopf (2) oder zusammen mit einer zwischen Kopf (1) und Gegenkopf (2) angeordneten Platte (10) einen mit einer Dichtkante (4) umfangenden Hohlraum (3) bilden, wobei dieser Hohlraum (3) mit einer Zuleitung (8) und einer Ableitung (9) versehen ist, **dadurch gekennzeichnet, dass**
der Hohlraum (3) im geschlossenen Zustand von einer Dichtlinie umfangen ist, welche durch die Dichtkante (4) des Kopfes (1) und die Gegendichtkante (5) des Gegenkopfes (2) oder durch die Dichtkante (4) und die Platte (10) gebildet wird, wobei Dichtkante (4) und Gegendichtkante (5) im geschlossenen Zustand formschlüssig aufeinander liegen oder Dichtkante (4) und Platte (10) im geschlossenen Zustand flach aufeinander liegen, so dass der Kopf (1) mit dem Gegenkopf (2) oder der Kopf (1) mit der Platte (10) im zusammengeführten Zustand einen vollständig abgeschlossenen und gegen aussen isolierten Hohlraum (3) bilden,
wobei die absolute Dichtheit und Isolation des Hohlraums (3) dadurch erreicht ist, dass zwischen der Dichtkante (4) und der Gegendichtkante (5) oder zwischen der Dichtkante (4) und der Platte (10) das Material der Probe (11) eingeklemmt wird und ein definierter Bereich der Probe (11) vom Umfeld im Hohlraum (3) eingeschlossen und isoliert wird.

7. Vorrichtung nach Anspruch 6,
**dadurch gekennzeichnet,**
**dass** der Gegenkopf (2) eine ebene Fläche ist und somit die Dichtkante (4) mit der Gegendichtkante (5) eine in einer Ebene liegende Dichtfläche aufweisen.

8. Vorrichtung nach Anspruch 6,
**dadurch gekennzeichnet,**
**dass** Dichtkante (4) und Gegendichtkante (5) ein beliebiges ineinander formschlüssig passendes Profil beziehungsweise Gegenprofil aufweisen

9. Vorrichtung nach Anspruch 6,
**dadurch gekennzeichnet,**
**dass** die Zuleitung (8) und die Ableitung (9) an der Außenkontur des Hohlraumes (3) und einander gegenüber angeordnet sind.

10. Vorrichtung nach Anspruch 6,
**dadurch gekennzeichnet,**
**dass** der Hohlraum (3) in der Art ausgestaltet ist, dass er zwischen Zuleitung (8) und Ableitung (9) einen Querschnitt A aufweist.

11. Vorrichtung nach Anspruch 6,
**dadurch gekennzeichnet,**
**dass** die Platte (10) aus Glas ist, wobei das Material der Probe (11) zwischen Dichtkante (4) und Platte (10) eingeklemmt ist.

12. Vorrichtung nach Anspruch 6,
**dadurch gekennzeichnet,**
**dass** die Platte (10) eine duktile Platte (10) ist, in welche die Dichtkante (4) leicht eindringt.

13. Vorrichtung nach Anspruch 6,
**dadurch gekennzeichnet,**
**dass** eine Probe (11) direkt zwischen Kopf (1) und Gegenkopf (2) angeordnet ist.

14. Vorrichtung nach Anspruch 6,
**dadurch gekennzeichnet,**
**dass** zwischen Probe (10) und Kopf (1) ein Filter (18) eingelegt ist.

15. Vorrichtung nach Anspruch 15,
**dadurch gekennzeichnet,**
**dass** der Filter (18) mit einem internen Standard imprägniert ist.

16. Vorrichtung nach Anspruch 6,
**dadurch gekennzeichnet,**
**dass** zwischen Probe (10) und Gegenkopf (11) eine Folie eingelegt ist.

17. Vorrichtung nach Anspruch 6,
**dadurch gekennzeichnet,**
**dass** die Dichtkante (4) mit einem O-Ring versehen ist.

18. Vorrichtung nach Anspruch 6,
**dadurch gekennzeichnet,**
**dass** die Gegendichtkante (5) mit einem O-Ring versehen ist.

19. Vorrichtung nach Anspruch 6,
**dadurch gekennzeichnet,**
**dass** die Zuleitung (8) im Kopf (1) und die Ableitung (9) im Gegenkopf (2) angeordnet ist.

## Claims

1. Method for preparing substances for qualitative and quantitative analyses **characterized in that**
in a delimited and sealed cavity (3), a defined region of a sample (11) with a desired analyte is clamped and isolated, then brought into contact with a liquid introduced through a supply line (8), wherein this liquid is supplied together with dragged-along or dissolved matrix and with the desired analyte as a so-called specimen via a discharge line (9) to a measuring device,
wherein the cavity (3) is delimited by a head (1) with a sealing edge (3) and a counter-head (2) with a counter sealing edge (5) or delimited by a head (1) with a sealing edge (3) and a plate (10) arranged between head (1) and counter-head (2), and
wherein the absolute sealing and isolation of the cavity (3) is achieved **in that** the material of the sample (11) is clamped between the sealing edge (4) and the counter sealing edge (5) or between the sealing edge (4) and the plate (10), and wherein the sealing edge (4) and counter sealing edge (5) lie on one another in an interlocking fashion in the closed state or the sealing edge (4) and the plate (10) lie flat on each other in the closed state.

2. Method according to claim 1,
**characterized in that**
the introduced liquid flows over the sample (11).

3. Method according to claim 1,
**characterized in that**
the introduced liquid flows through the sample (11).

4. The method according to claim 1,
**characterized in that**
prior to flowing over and flowing through, the introduced liquid remains in the cavity (3) together with the sample for 1-60 seconds, wherein said liquid acts on said sample (11) during this time, after which said specimen is supplied to the measuring instrument via the discharge line (9).

5. Method according to one of the preceding claims,
**characterized in that**
an internal standard is added to the specimen in said cavity, wherein said specimen and said internal standard are together supplied to the measuring instrument via the discharge line (9).

6. Device for carrying out the method according to claim 1, with a head (1) which, together with a counter-head (2) or together with a plate (10) arranged between head (1) and counter-head (2), forms a cavity (3) surrounded by a sealing edge (4), wherein this cavity (3) is provided with a supply line (8) and a discharge line (9), **characterized in that**
in the closed state, the cavity (3) is surrounded by a separation line formed by the sealing edge (4) of the head (1) and the counter sealing edge (5) of the counter head (2) or by the sealing edge (4) and the plate (10), wherein the sealing edge (4) and counter sealing edge (5) lie on one another in an interlocking fashion in the closed state or the sealing edge (4) and plate (10) lie flat on each other in the closed state, so that the head (1) and the counter-head (2) or the head (1) and the plate (10) form in the merged state a completely sealed cavity (3), which is isolated from the outside,
wherein the absolute sealing and isolation of the cavity (3) is achieved **in that** the material of the sample (11) is clamped between the sealing edge (4) and the counter sealing edge (5) or between the sealing edge (4) and the plate (10), and a defined region of the sample (11) is enclosed in the cavity (3) and isolated from the environment.

7. Device according to claim 6,
**characterized in that**
the counter head (2) is a planar surface and hence said sealing edge (4) and counter sealing edge (5) have a sealing face lying in a plane.

8. Device according to claim 6,
**characterized in that** the sealing edge (4) and counter sealing edge (5) have any profile and counter profile that fit together in an interlocking fashion.

9. Device according to claim 6,
**characterized in that** the supply line (8) and discharge line (9) are arranged on the outer contour of the cavity (3) and are facing one another.

10. Device according to claim 6,
**characterized in that** the cavity (3) is embodied such that it has a cross section A between the supply line (8) and the discharge line (9).

11. Device according to claim 6,
**characterized in that** the plate (10) is made of glass, wherein the material of the sample (11) is clamped between the sealing edge (4) and the plate (10).

12. Device according to claim 6,
**characterized in that** the plate (10) is a ductile plate, which is slightly penetrated by the sealing edge (4).

13. Device according to claim 6,
**characterized in that** a sample (11) is arranged directly between the head (1) and the counter head (2).

14. Device according to claim 6,
**characterized in that** a filter (18) is inserted between the sample (10) and the head (1).

15. Device according to claim 14,
**characterized in that** the filter (18) is impregnated with an internal standard.

16. Device according to claim 6,
**characterized in that** a film is inserted between the sample (10) and the counter head (2).

17. Device according to claim 6,
**characterized in that** the sealing edge (4) is provided with an O-ring.

18. Device according to claim 6,
**characterized in that** the counter sealing edge (5) is provided with an O-ring.

19. Device according to claim 6,
**characterized in that** the supply line (8) is arranged in the head, and the discharge line (9) is arranged in the counter head (2).

## Revendications

1. Procédé permettant de préparer des substances pour des analyses qualitatives et quantitatives
**caractérisé en ce que**
dans une cavité (3) confinée et hermétique, une région définie d'un échantillon (11) avec un analyte désiré est pressée et isolée, puis mise en contact avec un liquide introduit via une conduite d'alimentation (8), ce liquide étant acheminé conjointement avec des morceaux de matrice entraînés ou dissous ainsi qu'avec l'analyte désiré, sous une forme appelée spécimen, à travers une conduite d'évacuation (9) à un appareil de mesure,
dans lequel la cavité (3) est confinée entre une tête (1) avec une arête d'étanchéité (3) et une contre-tête (2) avec une contre-arête d'étanchéité (5) ou entre une tête (1) avec une arête d'étanchéité (3) et une plaque (10) disposée la tête (1) et la contre-tête (2), et
dans lequel l'herméticité et l'isolation absolue de la cavité (3) sont atteintes **en ce que** le matériau de l'échantillon (11) est pincé entre l'arête d'étanchéité (4) et la contre-arête d'étanchéité (5) ou entre l'arête d'étanchéité (4) et la plaque (10), et **en ce que** l'arête d'étanchéité (4) et la contre-arête d'étanchéité (5) s'emboîtent l'une sur l'autre dans l'état fermé, ou **en ce que** l'arête d'étanchéité (4) et la plaque (10) reposent à plat l'une sur l'autre dans l'état fermé.

2. Procédé selon la revendication 1,
**caractérisé en ce que**
le liquide introduit coule par-dessus l'échantillon (11).

3. Procédé selon la revendication 1,
**caractérisé en ce que**
le liquide introduit coule à travers l'échantillon (11).

4. Procédé selon la revendication 1,
**caractérisé en ce que**
le liquide introduit, avant de couler par-dessus ou à travers, reste dans la cavité (3) avec l'échantillon (11) pendant 1 à 60 secondes, le liquide agissant sur l'échantillon (11) pendant ce temps, le spécimen étant ensuite acheminé par la conduite d'évacuation (9) à l'appareil de mesure.

5. Procédé selon l'une des revendications précédentes,
**caractérisé en ce que**
un étalon interne est ajouté au spécimen dans la cavité, le spécimen et l'étalon interne étant acheminés ensemble via la conduite d'évacuation (9) à l'appareil de mesure.

6. Dispositif permettant la mise en oeuvre du procédé selon la revendication 1, avec une tête (1) qui, conjointement avec une contre-tête (2) ou conjointement avec une plaque (10) disposée entre la tête (1) et la contre-tête (2), forme une cavité (3) entourée par une arête d'étanchéité (4), ladite cavité (3) étant pourvue d'une conduite d'alimentation (8) et d'une conduite d'évacuation (9), **caractérisé en ce que**
la cavité (3) est, dans l'état fermé, entourée par une ligne d'étanchéité formée par l'arête d'étanchéité (4) de la tête (1) et la contre-arête d'étanchéité (5) de la contre-tête (2) ou par l'arête d'étanchéité (4) et la plaque (10), lesdites arête d'étanchéité (4) et contre-arête d'étanchéité (5) s'emboîtant l'une sur l'autre dans l'état fermé ou l'arête d'étanchéité (4) et la plaque (10) reposant à plat l'une sur l'autre dans l'état fermé, de sorte que la tête (1) et la contre-tête (2) ou la tête (1) et la plaque (10) forment dans l'état assemblé une cavité (3) complètement fermée et isolée de l'extérieur,
dans lequel l'herméticité et l'isolation absolue de la cavité (3) sont atteintes **en ce que** le matériau de l'échantillon (11) est pincé entre l'arête d'étanchéité (4) et la contre-arête d'étanchéité (5) ou entre l'arête d'étanchéité (4) et la plaque (10) et une région définie de l'échantillon (11) est enfermée et isolée de l'environnement à l'intérieur de la cavité (3).

7. Dispositif selon la revendication 6,
**caractérisé en ce que**
la contre-tête (2) est une surface plane, l'arête d'étanchéité (4) et la contre-arête d'étanchéité (5) ayant donc une surface d'étanchéité plane.

8. Appareil selon la revendication 6,
**caractérisé en ce que**
l'arête d'étanchéité (4) et la contre-arête d'étanchéité (5) ont un profil et contre-profil quelconques qui se correspondent l'un à l'autre de manière à pouvoir s'emboîter.

9. Dispositif selon la revendication 6,
**caractérisé en ce que**
la conduite d'alimentation (8) et la conduite d'évacuation (9) sont disposées sur le pourtour extérieur de la cavité (3) et l'une en face de l'autre.

10. Dispositif selon la revendication 6,
**caractérisé en ce que**
**en ce que** la cavité (3) est conçue de manière à présenter une section A entre la conduite d'alimentation (8) et la conduite d'évacuation (9).

11. Dispositif selon la revendication 6,
**caractérisé en ce que**
la plaque (10) est en verre, le matériau de l'échantillon (11) étant pincé entre l'arête d'étanchéité (4) et la plaque (10).

12. Dispositif selon la revendication 6,
**caractérisé en ce que**
la plaque (10) est une plaque ductile (10) dans laquelle le bord d'étanchéité (4) pénètre légèrement.

13. Dispositif selon la revendication 6,
**caractérisé en ce que**
un échantillon (11) est disposé directement entre la tête (1) et la contre-tête (2).

14. Dispositif selon la revendication 6,
**caractérisé en ce que**
un filtre (18) est inséré entre l'échantillon (11) et la tête (1).

15. Dispositif selon la revendication 14,
**caractérisé en ce que**
le filtre (18) est imprégné d'un étalon interne.

16. Dispositif selon la revendication 6,
**caractérisé en ce que**
un film est inséré entre l'échantillon (11) et la contre-tête (2).

17. Dispositif selon la revendication 6,
**caractérisé en ce que**
l'arête d'étanchéité (4) est munie d'un joint torique.

18. Dispositif selon la revendication 6,
**caractérisé en ce que**
la contre-arête d'étanchéité (5) est munie d'un joint torique.

19. Dispositif selon la revendication 6,
**caractérisé en ce que**
la conduite d'alimentation (8) est située dans dans la tête (1) et la conduite d'évacuation (9) dans la contre-tête (2).
